Europäisches Patentamt

European Patent Office

Office européen des brevets

(11) Publication number: **0 463 321 A2**

## EUROPEAN PATENT APPLICATION

(21) Application number: **91106938.3**

(22) Date of filing: **29.04.91**

(51) Int. Cl.⁵: **B23D 31/00**

(30) Priority: **26.06.90 GB 9014204**

(43) Date of publication of application:
**02.01.92 Bulletin 92/01**

(84) Designated Contracting States:
**AT BE CH DE DK ES FR GB GR IT LI LU NL SE**

(71) Applicant: **Hollands Engineering Limited**
**106 Bowling Back Lane**
**Bradford BD4 8SE(GB)**

(72) Inventor: **Holland, Ian, c/o Hollands**
**Engineering Limited**
**106 Bowling Back Lane**
**Bradford BD4 8SE(GB)**

(74) Representative: **Wharton, Peter Robert et al**
**Urquhart-Dykes & Lord Alliance House 29-31**
**Kirkgate**
**Bradford West Yorkshire, BD1 1OB(GB)**

(54) **Scroll shearing.**

(57) A method of scroll shearing comprises presenting a sheet of metal to a work area, stamping a series of holes in the metal, each hole corresponding to an apex of a polygon, and cutting between the holes whereby to produce interconnected polygonal shapes. This enables a series of straight cutting blades is employed to complete the scroll shearing process and the blades may be easily adjusted, sharpened, or the like without upsetting the geometry of the machine. The polygon is preferably a dodecagon. Also, the cutting blades are preferably aligned at a angle to the direction of passage of sheet material which reduces wastage further.

EP 0 463 321 A2

This invention relates to improvements in scroll shearing.

Scroll shearing is a method used to reduce wastage when cutting or stamping circular shapes from sheet metal. It involves cutting interconnected hexagonal shapes from the metal in which each hexagon is just larger than the circle to be subsequently stamped. In this way wastage is reduced.

However, in order to do this, it is necessary to provide one or more blades having the necessary configuration to cut out the hexagonal shapes. The shape of this blade is complicated, and it must be made in a very precise manner: therefore it is expensive to produce. If the blade is sharpened, for example, the geometry is upset and it may not function correctly. Scroll shearing blades therefore cost a great deal and the method is therefore only really of economic value where large production volumes are involved, for example the production of food cans.

The invention seeks to provide a method and apparatus for scroll shearing improved in the above respect.

According to the present invention there is provided a method of scroll shearing which comprises presenting a sheet of metal to a work area, stamping a series of holes in the metal, each hole corresponding to an apex of a polygon, and cutting between the holes whereby to produce interconnected polygonal shapes.

By the method of the invention, involving the stamping of a hole at each apex of the polygonal shape, a series of straight cutting blades may be employed to complete the scroll shearing process. Thus instead of a single complicated blade a number of simple blades are employed, all of which may be easily adjusted, sharpened, or the like without upsetting the geometry of the machine. Furthermore, the presence of holes at the apices of the polygonal shapes takes care of any slight irregularities.

The polygon may be a hexagon as previously known, but it is preferred to use a figure with more sides, e.g. a dodecagon.

As a preferred feature of the method of the invention, the cutting blades may be aligned at a angle to the direction of passage of sheet material. This has been found to reduce wastage even further as will be explained more fully hereinafter.

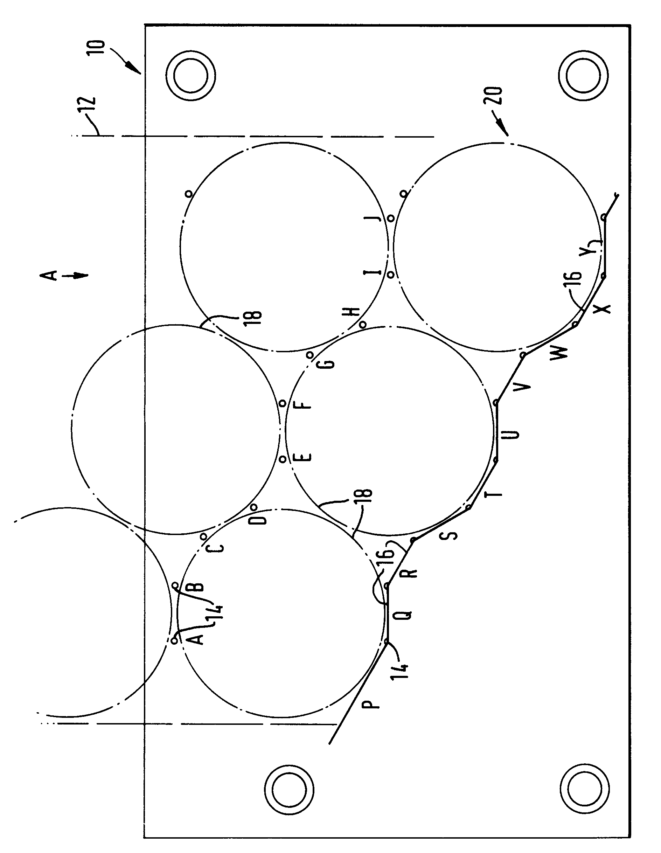

The invention will be described further, by way of example, with reference to the accompanying drawing, in which the sole figure is a diagrammatic plan view of a scroll shearing method in accordance with the invention.

Referring to the drawing, a work station generally designated 10 receives a continuous strip of sheet metal 12 travelling in the direction of arrow A. A series of punches (not shown) are aligned above the work station 10 controllable in timed relationship with the movement of the strip 12 whereby repetitively to punch out a series of holes 14 (A-J). It can be seen from the figure that the holes 14A-14J can each be considered as being an apex of a regular polygon. Although with traditional scroll shearing the polygon chosen is a hexagon, it will be appreciated that polyhedrons having a greater number of sides will result in less wastage but, hitherto, the additional complexity needed in the stamping blade has not justified this.

As the sheet is advanced over the work station a series of holes previously formed, 14 (P-Y) come in to register with a series of cutting blades 16. Each of the blades 16 is a single straight blade aligned so that its opposite ends terminate within one of the holes 14. The blades can then cut between the holes 14 thereby producing a strip of interconnected polygonal shapes each of which encompasses a respective circular shape 18 (shown in ghost in the drawing). As the sheet 12 is advanced successive strips 20 will be cut from the sheet 12. The latter, in the embodiment shown each containing three "circle blanks", are taken for the final stamping operation in which circles 18 are cut for use as, for example, bases or tops for drums.

The shape of the polygon shown in the embodiment of the drawing is a dodecagon but as previously mentioned other shapes could be used, for example the more conventional hexagon. A polygon with more sides will result in less wastage, but greater complexity in the stamping and cutting area. A dodecagon has been found to be a useful trade off between the two considerations.

As can be seen from the drawing, the strips 20 are stamped at an angle to the direction of travel A of the sheet 12. This brings the edges of the circle blanks 18 closer to the edges of the sheet 12 and reduces wastage. The angle at which the sheet is aligned is critical and will be approximately 30°. In the present case an angle of 29.5° was employed and this results in a reduction of wastage of about 9%, over and above that produced by the scroll shearing method of the invention, which can be very significant where large volumes are employed.

The method of the invention allows the use of simple blades and thus reduces the cost of scroll shearing apparatus over that conventionally employed. This brings the savings associated with scroll shearing into the reach of situations where the volume employed did not hitherto justify the capital expense. Furthermore the use of holes at each of the apices of the polygon results in a built-in tolerance of slight irregularities and reduces difficulties in machine setting.

**Claims**

1.  A method of scroll shearing which comprises presenting a sheet of metal to a work area, stamping a series of holes in the metal, each hole corresponding to an apex of a polygon, and cutting between the holes whereby to produce interconnected polygonal shapes.

2.  A method as claimed in claim 1 in which a series of straight cutting blades is employed to complete the scroll shearing process.

3.  A method as claimed in claim 2 in which the blades may be easily adjusted, sharpened, or the like without upsetting the geometry of the machine.

4.  A method as claimed in any of claims 1 to 3 in which the polygon is a dodecagon.

5.  A method as claimed in any of claims 1 to 4 in which the cutting blades are aligned at a angle to the direction of passage of sheet material.

6.  A method as claimed in claim 5 wherein the angle is 29.5°.